# EUROPÄISCHE PATENTSCHRIFT

(11) **EP 0 978 401 B1**
(45) Veröffentlichungstag und Bekanntmachung des Hinweises auf die Patenterteilung: **02.05.2003**
(21) Anmeldenummer: 99114586.3
(22) Anmeldetag: 26.07.1999
(51) Int. Cl.: B60J 7/057

(54) **Vorrichtung zum Verstellen von bewegbaren Teilen an Fahrzeugen mittels eines kurzschliessbaren Stellmotors**
Actuating device for adjusting movable parts in vehicles by short circuiting positioning motor
Dispositif d' actionnement pour déplacer des éléments mobiles pour véhicules au moyen d'un moteur de positionnement court-circuitable

(30) Priorität: 01.08.1998 DE 19834776
(43) Veröffentlichungstag der Anmeldung: 09.02.2000
(73) Patentinhaber: WEBASTO KAROSSERIESYSTEME GmbH, D-82131 Stockdorf (DE)
(72) Erfinder: Friesecke, Falko, 85521 Riemerling (DE); Meier, Bernhard, 85551 Kirchheim (DE)
(74) Vertreter: Wiese, Gerhard

(56) Entgegenhaltungen:
- EP-A- 0 278 536
- DE-A- 4 027 767
- DE-C- 4 040 460
- US-A- 5 101 684

## Beschreibung

Die vorliegende Erfindung bezieht sich auf eine Vorrichtung zum Verstellen von bewegbaren Teilen, insbesondere von Schiebedächern, Fenstern oder dergleichen, an Fahrzeugen, mit einem in seiner Drehrichtung umsteuerbaren elektrischen Stellmotor, der mit dem bewegbaren Teil mechanisch gekoppelt ist und einen Speisestromkreis aufweist, in dem eine Umpol-Schalteinrichtung zum wahlweisen Vorgeben der Drehrichtung des Stellmotors liegt und der zum Abbremsen des Stellmotors kurzgeschlossen wird, wenn das bewegbare Teil eine gewünschte Stellung erreicht. Eine Vorrichtung dieser Art ist in DE 4 040 460 offenbart.

Bei weiteren bekannten Vorrichtungen der gleichen Art (DE-OS 19 14 580, DE-OS 25 49 964, DE-AS 26 46 634) ist die Auslegung so getroffen, daß eine Kurzschlußbremsung des Stellmotors in einer vorbestimmten Sollstellung (Endstellung) des bewegbaren Teils erfolgt. Aus dieser Sollstellung wird das bewegbare Teil durch entsprechende Ansteuerung des Stellmotors herausbewegt.

Es ist ferner eine Antriebsvorrichtung für ein zwischen Endstellungen verstellbares Teil eines Fahrzeuges bekannt (DE 44 03 574 C1), bei der ein Elektromotor über ein ein Schneckenrad aufweisendes Untersetzungsgetriebe mit einem auf einer Abtriebswelle angeordneten Ritzel verbunden ist, das seinerseits über Antriebskabel mit dem verstellbaren Teil in Antriebsverbindung steht. Der Elektromotor wird mittels einer Schalteinrichtung in wenigstens einer vorbestimmten Stellung des verstellbaren Teils stillgesetzt, wobei zur Betätigung der Schalteinrichtung ein Schaltrad eines Exzenterrädergetriebes mit dem Untersetzungsgetriebe in Antriebsverbindung steht. Die Antriebswelle, der treibende Teil des Exzenterrädergetriebes und das Schneckenrad sind mit formschlüssigen Mitteln versehen, die eine axiale Verschiebung der Antriebswelle für eine Notbetätigung des Ritzels bei gleichzeitiger Entkopplung von Schneckenrad und Antriebswelle ermöglichen. Eine solche Lösung erfordert eine Vielzahl mechanischer Teile, so daß die Fertigungs- und Montagekosten relativ hoch sind. Außerdem kann durch Teilereibung ein hohes Geräuschniveau vorliegen.

Der Erfindung liegt die Aufgabe zugrunde, eine Vorrichtung zu schaffen, die eine Notbetätigung mit relativ niedrigem Kraftaufwand zuläßt, dabei aber mit vergleichsweise wenigen mechanischer Bauteilen auskommt und folglich nur einen relativ geringen Fertigungs- und Montageaufwand erfordert.

Diese Aufgabe wird ausgehend von einer Vorrichtung der eingangs genannten Art erfindungsgemäß dadurch gelöst, daß der Stellmotor mit dem bewegbaren Teil ständig mechanisch gekoppelt ist und daß die Vorrichtung mit einer Halbleiteranordnung versehen ist, die einen Stromfluß im Speisestromkreis des Stellmotors sowohl für beide Drehrichtungen als auch für eine gewollte Kurzschlußbremsung zuläßt, bei stromloser Umpol-Schalteinrichtung einen Stromfluß im Speisestromkreis jedoch mindestens weitgehend unterdrückt und damit eine Kurzschlußbremsung des Stellmotors verhindert.

Die ständige mechanische Kopplung von Stellmotor und bewegbarem Teil bedeutet, daß eine Schalt- oder Reibkupplung zwischen dem Stellmotor und dem bewegbaren Teil entfällt Gleichwohl ist aber bei der erfindungsgemäßen Lösung eine Notbetätigung des bewegbaren Teils, insbesondere bei Ausfall der Fahrzeug-Bordspannung, mit geringem Kraftaufwand möglich, weil zum Notbetätigen bei stromloser Umpol-Schalteinrichtung nicht gegen eine Kurzschlußbremse des Stellmotors gearbeitet zu werden braucht.

Bevorzugte weitere Ausgestaltungen der Erfindung ergeben sich aus den Unteransprüchen.

Die Umpol-Schalteinrichtung kann in an sich bekannter Weise (zum Beispiel DE 43 31 640 C1) zwei Relais aufweisen, von denen jedes mit einem Umschaltkontakt und zwei Festkontakten versehen ist, wobei der Stellmotor zwischen die beiden Umschaltkontakte geschaltet ist.

Eine besonders einfache Schaltungsauslegung wird dabei erhalten, wenn jeweils der eine Festkontakt mit der einen und jeweils der andere Festkontakt mit der anderen Seite einer Speisespannungsquelle verbunden ist, und wenn die Halbleiteranordnung zwei Dioden aufweist, die jeweils in Durchlaßrichtung zwischen eine Seite der Speisespannungsquelle und den betreffenden Festkontakt geschaltet sind.

Die beiden Dioden sind vorzugsweise jeweils an den Festkontakt der beiden Relais angeschlossen, der bei abgefallenem Relais mit dem Umschaltkontakt des betreffenden Relais verbunden ist.

Zum Ansteuern der beiden Relais kann zwechmäßig eine Steuerstufe vorgesehen sein, die für eine Kurzschlußbremsung die Umschaltkontakte der beiden Relais jeweils mit dem nicht mit einer Diode verbundenen Festkontakt der Relais in Kontakt bringt.

Die Steuerstufe kann vorteilhaft so ausgelegt sein, daß im Normalbetrieb die Kurzschlußbremsung durch entsprechende Ansteuerung der Relais nach einer zum Abbremsen des Stellmotors ausreichenden Zeitspanne selbsttätig aufgehoben wird.

Bevorzugte Ausführungsbeispiele der Erfindung sind nachstehend unter Bezugnahme auf die beigefügten Zeichnungen näher erläutert. Es zeigen:
- FIG. 1: eine schematische Darstellung eines in Schließstellung befindlichen Hebe-Schiebedaches mit Stellmotor in. Verbindung mit einer ersten Ausführungsform einer zugehörigen Steueranordnung;
- FIGN. 2 und 3: schematische Darstellungen des Hebe-Schiebedaches nach FIG. 1, wobei das Dach in ausgestellter beziehungsweise zurückgeschobener Lage veranschaulicht ist;
- FIG. 4: ein Prinzipschaltbild der Anordnung nach FIG. 1 bei eingeschalteter Kurzschlußbremse;
- FIG. 5: ein Prinzipschaltbild der Anordnung nach FIG. 1 im spannungslosen Zustand sowie
- FIG. 6: ein Prinzipschaltbild einer abgewandelten Ausführungsform der Steueranordnung für den Stellmotor.

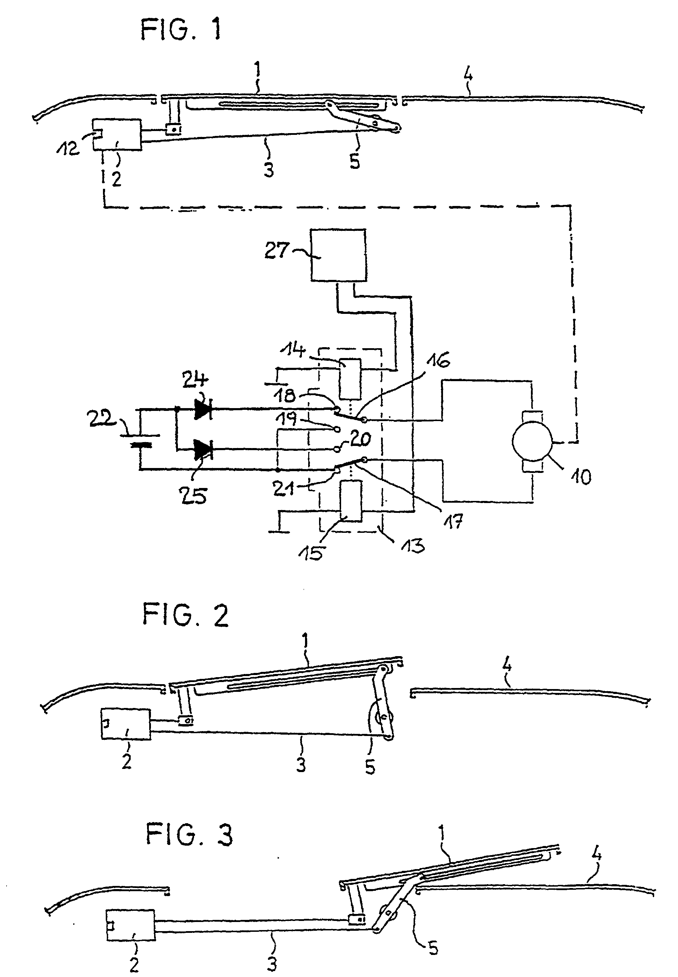

Bei dem Ausführungsbeispiel gemäß den FIGN. 1 bis 3 wird der Deckel 1 eines Hebe-Schiebe- oder Spoiler-Daches mittels einer Verstellvorrichtung über Antriebselemente 3, beispielsweise drucksteife Antriebskabel, wahlweise zwischen der in FIG. 1 dargestellten Schließstellung, der in eine Lüftungsstellung ausgestellten Lage nach FIG. 2 und der nach hinten über ein festes Dachteil 4 zurückgeschobenen Lage gemäß FIG. 3 verstellt. Die Antriebselemente 3 sind im Ausführungsbeispiel mit dem Deckel 1 über eine Verstellmechanik 5 verbunden. Die im Einzelfall vorgesehene Art der Ankopplung der Verstellvorrichtung an den Deckel 1 stellt jedoch keinen Teil der vorliegenden Erfindung dar; sie kann in beliebiger, an sich bekannter Weise erfolgen.

Zu der Verstellvorrichtung gehören ein Stellmotor 10 und ein mit dessen Abtriebsseite verbundenes Untersetzungsgetriebe 2, dessen Ausgang mit den Antriebselementen 3 in Antriebsverbindung steht. Der Stellmotor 10 ist über das Untersetzungsgetriebe 2, die Antriebselemente 3 und die Verstellmechanik 5 mit dem Deckel 1 ständig mechanisch gekoppelt. Der Deckel 1 kann bei einem Ausfall des elektromotorischen Antriebs aber auch von Hand verstellt, vor allem in seine Schließlage gebracht, werden (sogenannte Notbetätigung). Das kann insbesondere dadurch erfolgen, daß in an sich bekannter Weise (zum Beispiel DE 44 19 176 C1) ein Notbetätigungswerkzeug mit einem in FIG. 1 schematisch bei 12 angedeuteten Werkzeugaufnahmeteil des Untersetzungsgetriebes 2 in Eingriff gebracht und dann mittels des Notbetätigungswerkzeugs der Deckel 1 unter Mitnahme des angekoppelten Stellmotors 10 von Hand verschoben wird.

Im Speisestromkreis des Stellmotors 10 liegt eine insgesamt mit 13 bezeichnete Umpol-Schalteinrichtung, zu der zwei Relais 14 und 15 gehören. Jedes der Relais 14 und 15 weist einen Umschaltkontakt 16 beziehungsweise 17 sowie zwei Festkontakte 18 und 19 beziehungsweise 20 und 21 auf. Die Umpol-Schalteinrichtung 13 erlaubt es, die an den Stellmotor 10 von einer Spannungsquelle 22 angelegte Speisespannung umzupolen, um auf diese Weise die Drehrichtung des Stellmotors 10 umzukehren. Zwischen die positive Seite (+) der Spannungsquelle 22 und die Festkontakte 18 und 20 ist jeweils eine Diode 24 beziehungsweise 25 so geschaltet, daß ihre Anode mit der positiven Seite (+) der Spannungsquelle 22 verbunden ist und ihre Kathode an den Festkontakt 18 beziehungsweise 20 angeschlossen ist. Die Festkontakte 19 und 21 stehen mit der negativen Seite (-)der Spannungsquelle 22 in Verbindung. Die Relais 14 und 15 werden von einer Steuerstufe 27 angesteuert.

FIG. 1 zeigt die Umschaltkontakte 16, 17 in der der einen Drehrichtung des Stellmotors 10 entsprechenden Stellung, in welcher das Relais 14 abgefallen ist, während das Relais 15 angezogen hat. Strom fließt von der positiven Seite der Spannungsquelle 22 (Batterie) über die in Durchlaßrichtung gepolte Diode 24, den Umschaltkontakt 16, den Stellmotor 10 und den Umschaltkontakt 17 zur negativen Seite der Spannungsquelle 22.

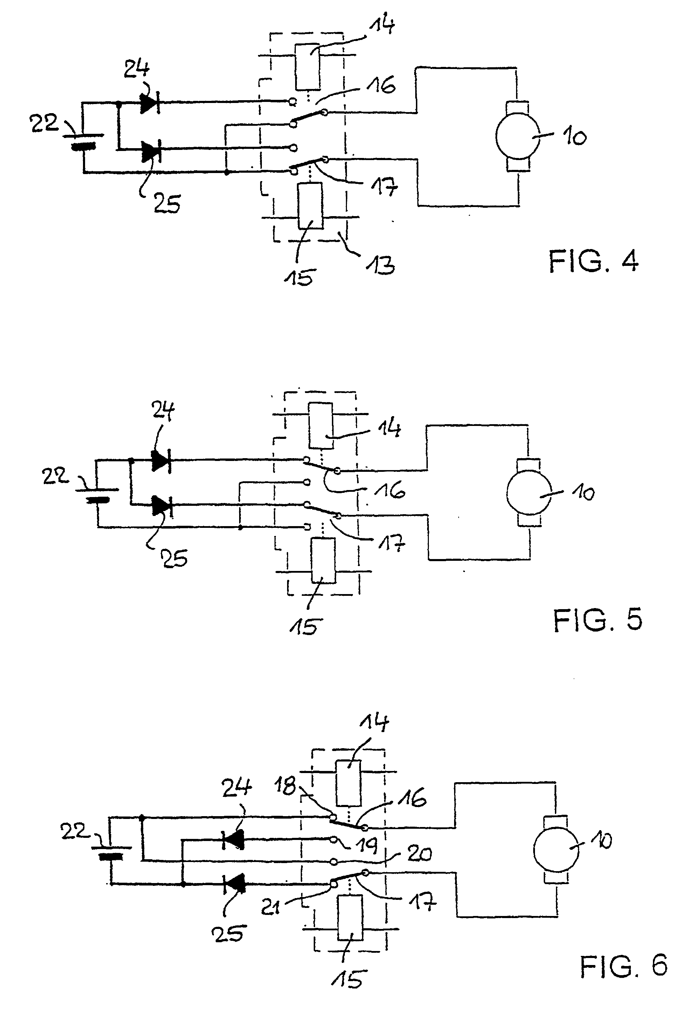

Erreicht der Deckel 1 die gewünschte Stellung, wird über die Steuerstufe 27 auch das Relais 14 zum Anzug gebracht Die Schaltungsanordnung nimmt dann die in FIG. 4 veranschaulichte Schaltstellung ein, in welcher der Stellmotor 10 über die Umschaltkontakte 16 und 17 kurzgeschlossen ist. Der Motor 10 wird wirkungsvoll abgebremst; der Deckel 1 wird stillgesetzt. Die Schaltungsanordnung kann grundsätzlich so ausgelegt sein, daß sie in dem Schaltzustand gemäß FIG. 4 verharrt, bis entweder über die Steuerstufe 27 der Antrieb wieder in der einen oder der anderen Richtung wirksam gemacht wird oder die Speisespannung der Relais 14 und 15 ausfällt, das heißt ein Zustand eintritt, der eine Notbetätigung erforderlich machen kann. Vorzugsweise ist der Schaltungsaufbau jedoch so beschaffen, daß die Kurzschlußbremsung nur für eine vorgegebene Zeitspanne erfolgt, die eine sichere Stillsetzung des Antriebes gewährleistet, und daß die Schaltungsanordnung dann selbsttätig in einen Ruhezustand übergeht.

Im Ruhezustand sind beide Relais 14 und 15 stromlos und damit abgefallen. Die Umschaltkontakte 16 und 17 stehen in der in FIG. 5 gezeigten Stellung. In dieser Stellung sind die beiden Dioden 24 und 25 im Speisestromkreis des Stellmotors 10 entgegengesetzt gepolt in Reihe geschaltet. Das bedeutet, daß unabhängig davon, in welcher Richtung im Speisestromkreis des Stellmotors 10 ein Strom zu fließen sucht, immer eine der Dioden 24 und 25 in Sperrichtung gepolt ist. Dieser Schaltzustand kann gewollt über die Steuerstufe 27 herbeigeführt werden; er stellt sich aber selbsttätig auch bei Funktionsstörungen des Antriebes ein, und zwar insbesondere bei einem Ausfall der Bordspannung des Fahrzeuges. In diesem Schaltzustand wird eine Kurzschlußbremsung des Stellmotors 10 verhindert. Eine Notbetätigung des Deckels 1 ist mit relativ geringem Kraftaufwand möglich, selbst wenn dabei der Deckel 1 mit dem Stellmotor 10 in Antriebsverbindung bleibt.

Um den Stellmotor 10 in der anderen Richtung zu verstellen, werden über die Steuerstufe 27 die Relais 14, 15 so angesteuert, daß das Relais 15 abgeworfen und das Relais 14 zum Anziehen gebracht wird. Die Umschaltkontakte 16, 17 wechseln gegenüber der Darstellung der FiG. 1 beide ihre Schaltstellung. Strom fließt von der positiven Seite der Spannungsquelle 22 (Batterie) über die in Durchlaßrichtung gepolte Diode 25, den Umschaltkontakt 17, den Stellmotor 10 und den Umschaltkontakt 16 zur negativen Seite der Spannungsquelle 22.

Bei dem abgewandelten Ausführungsbeispiel gemäß FIG. 6 sind die Kathoden der beiden Dioden 24 und 25 an die negative Seite der Spannungsquelle 22 angeschlossen, während die Anode der Diode 24 mit dem Festkontakt 19 und die Anode der Diode 25 mit dem Festkontakt 21 verbunden ist. Die Funktionsweise der Anordnung nach FIG. 6 ist analog derjenigen des zuvor beschriebenen Ausführungsbeispiels.

Die Umpol-Schalteinrichtung 13 kann statt aus den Relais 14 und 15 auch aus Halbleiterschaltelementen aufgebaut sein.

### Bezugszeichenliste

- 1: Deckel
- 2: Untersetzungsgetriebe
- 3: Antriebselement
- 4: Dachteil
- 5: Verstellmechanik
- 10: Stellmotor
- 12: Werkzeugaufnahmeteil
- 13: Umpol-Schalteinrichtung
- 14, 15: Relais
- 16, 17: Umschaltkontakt
- 18, 19, 20, 21: Festkontakt
- 22: Spannungsquelle
- 24, 25: Diode
- 27: Steuerstufe

## Patentansprüche

1. Vorrichtung zum Verstellen von bewegbaren Teilen, insbesondere von Schiebedächern, Fenstern oder dergleichen, an Fahrzeugen, mit einem in seiner Drehrichtung umsteuerbaren elektrischen Stellmotor (10), der mit dem bewegbaren Teil mechanisch gekoppelt ist und einen Speisestromkreis aufweist, in dem eine Umpol-Schalteinrichtung (13) zum wahlweisen Vorgeben der Drehrichtung des Stellmotors (10) liegt und der zum Abbremsen des Stellmotors kurzgeschlossen wird, wenn das bewegbare Teil eine gewünschte Stellung erreicht, **dadurch gekennzeichnet, daß** der Stellmotor (10) mit dem bewegbaren Teil (Deckel 1) ständig mechanisch gekoppelt ist und daß eine Halbleiteranordnung (Dioden 24, 25) vorgesehen ist, die einen Stromfluß im Speisestromkreis des Stellmotors (10) sowohl für beide Drehrichtungen als auch für eine gewollte Kurzschlußbremsung zuläßt, bei stromloser Umpol-Schalteinrichtung (13) einen Stromfluß im Speisestromkreis jedoch mindestens weitgehend unterdrückt und damit eine Kurzschlußbremsung des Stellmotors verhindert

2. Vorrichtung nach Anspruch 1, **dadurch gekennzeichnet, daß** die Umpol-Schalteinrichtung (13) zwei Relais (14, 15) aufweist, von denen jedes mit einem Umschaltkontakt (16, 17) und zwei Festkontakten (18, 19; 20, 21) versehen ist, und daß der Stellmotor (10) zwischen die beiden Umschaltkontakte geschaltet ist.

3. Vorrichtung nach Anspruch 2 **dadurch gekennzeichnet, daß** jeweils der eine Festkontakt (18, 20; 19, 21) mit der einen und jeweils der andere Festkontakt mit der anderen Seite einer Speisespannungsquelle (22) verbunden ist, und daß die Halbleiteranordnung zwei Dioden (24, 25) aufweist, die jeweils in Durchlaßrichtung zwischen eine Seite der Speisespannungsquelle 22 und den betreffenden Festkontakt geschaltet sind.

4. Vorrichtung nach Anspruch 3, **dadurch gekennzeichnet, daß** die beiden Dioden (24, 25) jeweils an den Festkontakt (18, 20 oder 19, 21) der beiden Relais (14 bzw. 15) angeschlossen sind, der bei abgefallenem Relais mit dem Umschaltkontakt (16 bzw. 17) des betreffenden Relais verbunden ist.

5. Vorrichtung nach Anspruch 4, **dadurch gekennzeichnet, daß** zum Ansteuern der beiden Relais (14, 15) eine Steuerstufe (27) vorgesehen ist, die für eine Kurzschlußbremsung die Umschaltkontakte (16, 17) der beiden Relais jeweils mit dem nicht mit einer Diode (24, 25) verbundenen Festkontakt der Relais in Kontakt bringt.

6. Vorrichtung nach einem der vorhergehenden Ansprüche, **dadurch gekennzeichnet, daß** die Steuerstufe (27) so ausgelegt ist, daß im Normalbetrieb die Kurzschlußbremsung durch entsprechende Ansteuerung der Relais (14, 15) nach einer zum Abbremsen des Stellmotors (10) ausreichenden Zeitspanne selbsttätig aufgehoben wird.

## Claims

1. Device for adjusting movable parts, especially sliding roofs, windows or the like, on vehicles with an electric positioning motor (10), the direction of rotation of which can be reversed and which is coupled mechanically to the movable part and has a supply circuit, in which a polarity switching device (13) for the selective stipulation of the direction of rotation of the positioning motor (10) is situated and which is short-circuited to brake the positioning motor when the movable part reaches a desired position, **characterised in that** the positioning motor (10) is continuously coupled mechanically to the movable part (cover 1) and **in that** a semiconductor arrangement (diodes 24, 25) is provided, which allows a flow of current in the supply circuit of the positioning motor (10) both for both directions of rotation and for a desired short-circuit braking operation but, when the polarity switching device (13) is de-energised, at least to a large extent suppresses a flow of current in the supply circuit and hence prevents short-circuit braking of the positioning motor.

2. Device according to Claim 1, **characterised in that** the polarity switching device (13) has two relays (14, 15), each of which is provided with one changeover contact (16, 17) and two fixed contacts (18, 19; 20, 21), and **in that** the positioning motor (10) is connected between the two changeover contacts.

3. Device according to Claim 2, **characterised in that** one fixed contact (18, 20; 19, 21) is connected to one side of a supply-voltage source (22) and the other fixed contact is connected to the other side of the said source, and **in that** the semiconductor arrangement has two diodes (24, 25), which are each connected in the forward direction between one side of the supply-voltage source 22 and the relevant fixed contact.

4. Device according to Claim 3, **characterised in that** the two diodes (24, 25) are connected to the respective fixed contact (18, 20 or 19, 21) of the two relays (14 and 15 respectively) which is connected to the changeover contact (16 and 17 respectively) of the relevant relay when the relay drops out.

5. Device according to Claim 4, **characterised in that** a control stage (27), which, for short-circuit braking, brings the changeover contacts (16, 17) of the two relays into contact with the respective fixed contact of the relays that is not connected to a diode (24, 25), is provided for driving the two relays (14, 15).

6. Device according to one of the preceding claims, **characterised in that** the control stage (27) is designed in such a way that, in normal operation, short-circuit braking is cancelled automatically by appropriate driving of the relays (14, 15) after a period of time sufficient to brake the positioning motor (10).

## Revendications

1. Dispositif pour déplacer des pièces mobiles, en particulier des toits ouvrants, des fenêtres ou similaires, sur des véhicules avec un moteur de positionnement (10) électrique réversible dans son sens de rotation, qui est couplé mécaniquement avec la partie mobile et présente un circuit d'alimentation dans lequel est disposé un dispositif inverseur de polarité (13) pour la spécification au choix du sens de rotation du moteur de positionnement (10) et qui est court-circuité pour le ralentissement du moteur de positionnement lorsque la pièce déplaçable atteint une position souhaitée, **caractérisé en ce que** le moteur de positionnement (10) est constamment couplé mécaniquement avec la pièce mobile (couvercle 1) et **en ce qu'**il est prévu un dispositif à semi-conducteurs (diodes 24, 25), qui autorise un flux de courant dans le circuit d'alimentation du moteur de positionnement (10) aussi bien pour les deux sens de rotation que pour un freinage à court-circuit voulu, mais atténue au moins largement un flux de courant dans le circuit d'alimentation dans le cas d'un dispositif inverseur de polarité (13) sans courant et empêche ainsi un freinage à court-circuit du moteur de positionnement.

2. Dispositif selon la revendication 1, **caractérisé en ce que** le dispositif inverseur de polarité (13) présente deux relais (14, 15), dont chacun est pourvu d'un contact inverseur (16, 17) et de deux contacts fixes (18, 19 ; 20, 21) et **en ce que** le moteur de positionnement (10) est branché entre les deux contacts inverseurs.

3. Dispositif selon la revendication 2, **caractérisé en ce que** respectivement un contact fixe (18, 20; 19, 21) est relié à un côté d'une source d'alimentation de tension (22) et l'autre contact fixe à l'autre côté, et **en ce que** le dispositif à semi-conducteurs présente deux diodes (24, 25), qui sont branchées respectivement dans le sens de passage entre un côté de la source de tension d'alimentation (22) et le contact fixe concerné.

4. Dispositif selon la revendication 3, **caractérisé en ce que** les deux diodes (24, 25) sont raccordées respectivement au contact fixe (18, 20 ou 19, 21) des deux relais (14 ou 15), qui, lorsque le relais est tombé, est relié au contact inverseur (16 ou 17) du relais concerné.

5. Dispositif selon la revendication 4, **caractérisé en ce qu'**il est prévu un niveau de commande (27) pour l'amorçage des deux relais (14, 15), qui met en contact, pour un freinage à court-circuit, les contacts inverseurs (16, 17) des deux relais respectivement avec le contact fixe des relais qui n'est pas relié à une diode (24, 25).

6. Dispositif selon l'une quelconque des revendications précédentes, **caractérisé en ce que** le niveau de commande (27) est conçu de telle façon que, en mode normal, le freinage à court-circuit est supprimé automatiquement par un amorçage approprié des relais (14, 15) après un laps de temps suffisant pour le ralentissement du moteur de positionnement (10).
